# EUROPEAN PATENT SPECIFICATION

(11) **EP 1 346 890 B1**
(45) Date of publication and mention of the grant of the patent: **05.12.2007**
(21) Application number: 03380058.2
(22) Date of filing: 13.03.2003
(51) Int. Cl.: B60S 1/40

(54) **Wiper blade adapter for the arm of a car windscreen wiper**
Wischerblattadapter für einen Kraftfahrzeugscheibenwischerarm
Adaptateur pour balai pour connection avec un bras d'essuie-glace de véhicule

(30) Priority: 21.03.2002 ES 200200690 U
(43) Date of publication of application: 24.09.2003
(73) Proprietor: Doga S.A., 08630 Abrera (Barcelona) (ES)
(72) Inventor: Biosca Munts, Josep, 08250 Sant Joan de Vilatorrada Barcelona (ES); Chicon Montoya, Carlos, 08640 Olesa de Montserrat (Barcelona) (ES)
(74) Representative: Curell Aguilà, Marcelino

(56) References cited:
- WO-A-99/20504
- GB-A- 2 156 666

## Description

### Field of the invention

This invention relates to a wiper blade adapter for the arm of a car windscreen wiper, particularly a device of the type which enables a wide range of wiper blades to be mounted on the arm of another, also extensive, range of windscreen wipers.

### State of the art

Document WO 99/20504 discloses the preamble of claim 1.Wiper blade adapters for windscreen wiper arms are known of the type in which the free end of the arm thereof adopts a crook shape, said adapters being made up of a body formed by two long walls which are parallel and are associated to one another, in the front thereof, by means of cross members that define, on the one hand, means for attachment to a transversal bolt on the wiper blade said means consisting of a grooved partition, which opens into respective notches in said walls, and, on the other hand, means for securing the crook shaped free ends of the windscreen wiper arms, according to the different radii and lengths of said free ends, and for limiting the relative longitudinal movement between the wiper blade and the windscreen wiper arm, with said securing and movement limiting means being made up of double purpose cross member partitions having a straight flat-convex section, while, at the rear thereof, said walls are associated by a bridge.

Some examples of the afore-mentioned type of adapters include those which are the object of document EP 0 625 454, in which the adapter body is made up of two walls that are only associated at the ends thereof and is provided with inner and outer lugs for the attachment thereof to the wiper blade, which does not have a bolt, and to the crook of the arm; document EP 0 694 459, in which the adapter is made up of two or three pieces of which one or two are clamped to the wiper blade bolt and the third piece consists of a small cover; document WO 99/20504, in which the adapter is made up of a body the walls of which are associated at both ends by bridges, it being possible to hinge the crook of a windscreen wiper arm by any of the adapter ends, with inner stops being provided that engage with said bridges to limit the angular movement of said arm; document FR 2631300, in which the adapter is made up of a grooved body closed at the front end thereof; and document EP 0 585 811 in which the adapter is made up of a body closed at the front end thereof which is provided at the rear end thereof with respective stops that are housed between the two parts of the crook, which makes it necessary to provide an adapter for every crook radius and for every length of the free end thereof.

All the cited adapters can only be used for a reduced range of crook arms, since most of them have one single cross member or the like for securing the crook, whereby it is necessary that the wiper blade sets put on sale are provided with a series of adapters intended to satisfy the coupling requirement of every windscreen wiper arm, with the result that only two of all of said series can be used, with the remainder being thrown away. In the case of the document WO 99/20504, said circumstance is reduced, since each adapter is suitable for two types of windscreen wiper arm crook.

### Summary of the invention

In order to reduce to two the number of adapters included in each set of two windscreen wiper blades, so that, with the two being equal and each intended for one of the wiper blades in the set, they each constitute a universal adapter that enables a wiper blade to be mounted on any model of windscreen wiper arm crook, the solution has been adopted to organise the adapter so that it has a series of cross member partitions which, together with the grooved partition, form a variety of securing means in one and the same adapter allowing the attachment thereto of a wide range of windscreen wiper arm crooks having different circumference radii and free end lengths.

According to the foregoing premise, the universal adapter of the invention has been developed, which, being of the type made up of a body formed by two long walls which are parallel and associated to one another, in the front part thereof, by means of cross members that define, on the one hand, means for attachment to a transversal bolt on the wiper blade said means being made up of a grooved partition, which opens into respective notches in said walls, and, on the other hand, means for securing the crook shaped free ends of the windscreen wiper arms, according to the different radii and lengths of said free end, and for limiting the relative movement between the wiper blade and the windscreen wiper arm, said securing and movement limiting means being formed by double purpose cross member partitions having a straight flat-convex section, whereby the body made up of the two parallel walls has its two ends, front and rear, open, characterised in that the walls are deformable in the rear part thereof that constitutes said rear end, on the inner surfaces of which said two parallel walls have, on their end edges of the rear part of the body, respective equal projections, which are grooved longitudinally and have their concavities arranged in opposition for engaging the edges of a wiper arm.

Preferably, the concavity of each of the grooved projections on the rear part of the body is shaped to complement the corresponding edge of the windscreen wiper arm.

Advantageously, the body, on the edge of the rear part of the walls opposite the notches thereon, has on the outside a longitudinal cantilever wing which runs substantially along said edge, which, preferably, increases its width towards the end edge of the rear end of the body.

Preferably, the walls, which are rigidly parallel, are associated in the front part thereof, not only by the grooved partition for attachment to the wiper blade bolt, but also by two cross member partitions having a straight flat-convex section.

Advantageously, the walls are rigidly parallel in the front part thereof and have, on the inner surface of the end edges thereof, respective opposed barbed projections each of which has on the inside thereof a flat wall which, together, form a movement limiting stop for a windscreen wiper arm crook mounted on the cross member partition having a straight flat-convex section that is farthest removed from the grooved partition.

### Brief description of the drawings

In order to facilitate the understanding of the foregoing ideas, there follows a description of a preferred embodiment of the invention, with reference to the annexed illustrative drawings, in which:
Figure 1, represents, as a side elevation view, an embodiment of the adapter of the invention.
Figure 2, represents, as a bottom plan view, the adapter in the preceding figure.
Figure 3, represents, as a rear elevation view, the adapter in Figure 1.
Figure 4, represents a section through line IV-IV of Figure 3.
Figure 5, represents, as a rear perspective view, the adapter in Figure 1.
Figure 6, represents, also as a rear perspective view, the adapter in Figure 5 attached to a windscreen wiper arm crook.
Figures 7, 8 and 9, represent, in a similar section to that shown in Figure 4, various possible ways of attaching the crooks of a windscreen wiper arm to the adapter of the invention.

### Detailed description of an embodiment of the invention

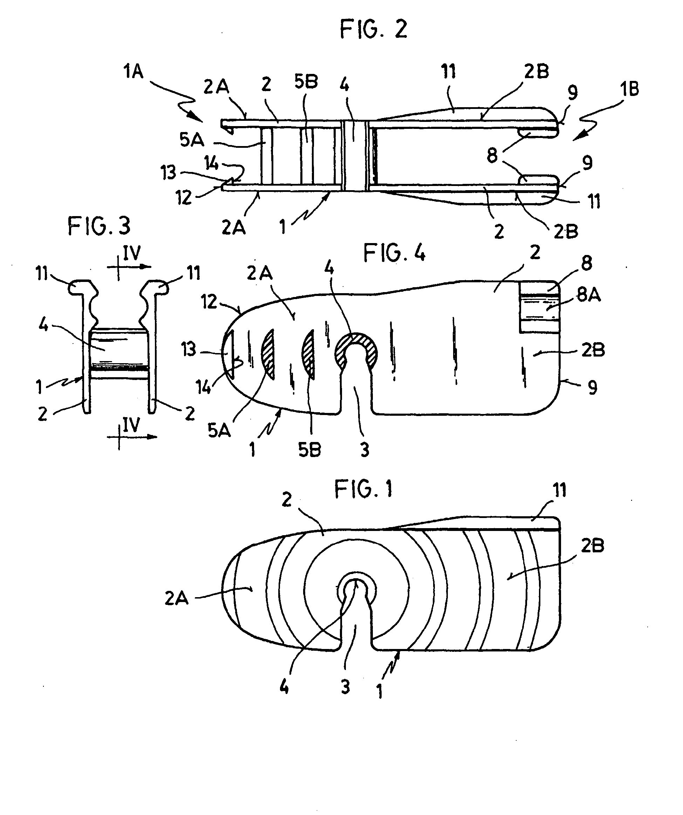

The universal adapter of the invention, as shown in Figures 1 to 4, consists of a body 1, which is an integral part and is preferably made by moulding a synthetic plastic and which is distinguished by two walls 2 parallel to one another each of which has a notch 3 in registration with a grooved partition 4 which associates them transversally and constitutes the means for securing the adapter to the bolt which is conventionally provided on wiper blades, not shown.

Each of the two walls 2 is distinguished in a front part 2A and in a rear part 2B located on either side of notches 3 thereof and grooved partition 4.

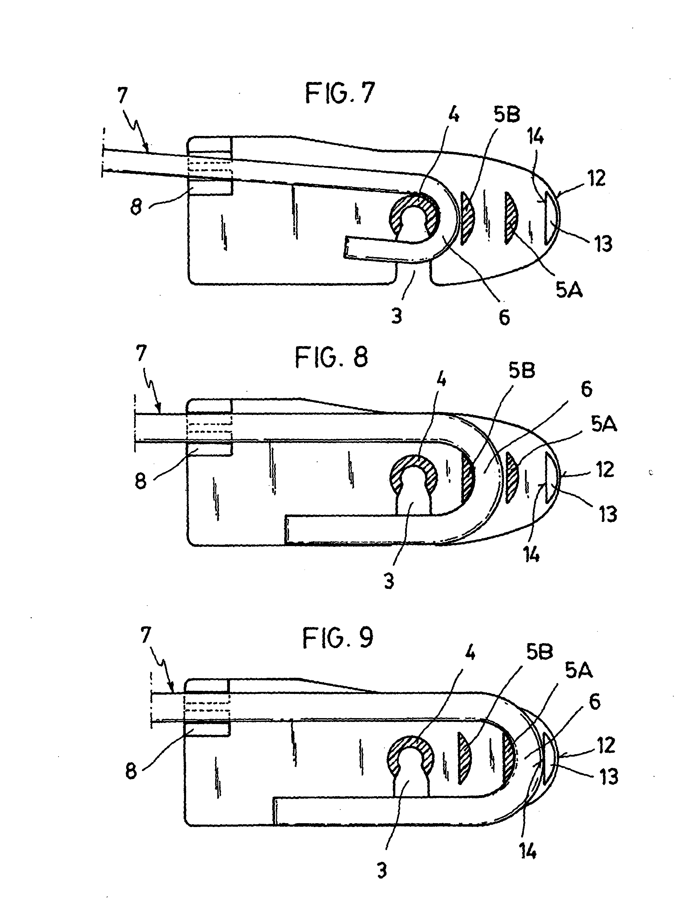

Body 1 has its front 1A and rear 1B ends open, as can be seen in Figures 2 and 3, while the walls 2 thereof are rigidly associated in the front parts thereof 2A by means of, not only said grooved partition 4, but also respective cross member partitions 5A and 5B having a straight flat-convex section, in which the convex parts form seats for the crook 6 of a windscreen wiper arm 7 and the flat parts form stops that limit the longitudinal movement of crook 6, as shown in Figures 7 to 9, while the same walls 2, at the rear thereof 2B, can be deformed.

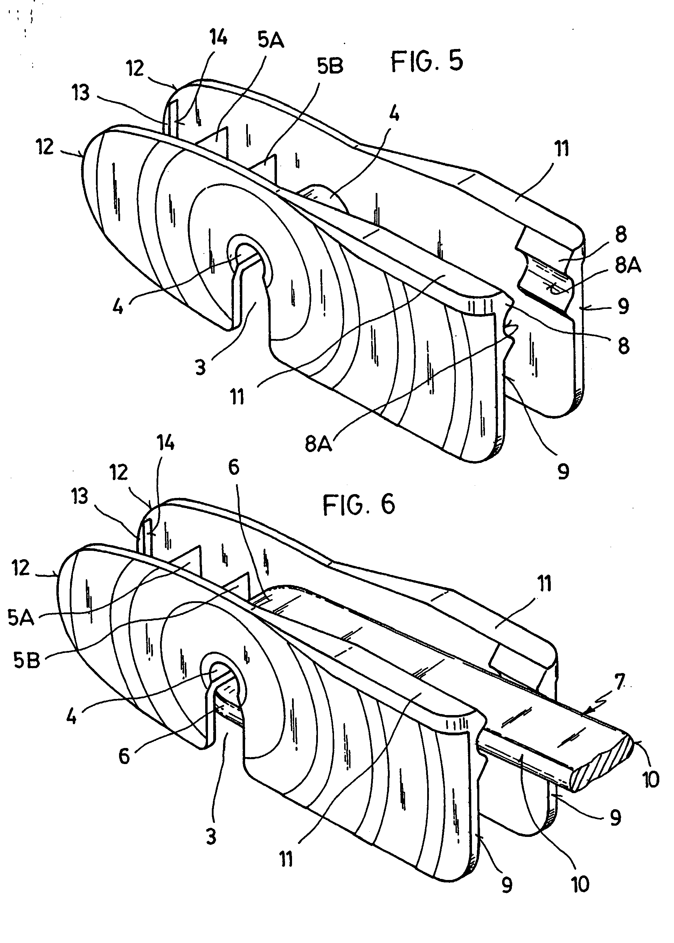

Walls 2, in the rear thereof 2B that can be deformed and on the inner surfaces thereof, have respective projections 8 which, being placed on the outer edges 9 of said inner surfaces, are equal and grooved in the longitudinal direction of body 1, and have the concavities thereof 8A arranged in opposition, as shown particularly in Figures 3, 5 and 6, with the configuration of said concavities 8A, of said grooved projections 8, complementing the corresponding edge 10 of arm 7 of the windscreen wiper.

Moreover, in the said rear part 2B of walls 2, the latter are provided on the edge thereof opposite to notches 3 with a longitudinal, cantilever wing 11 which runs substantially along said edge of referenced rear part 2B, with the width of said longitudinal wing 11 increasing towards the end edge 9 of said rear part 2B.

On the other hand, as shown in Figures 2, 3 and 5 to 9, the end edges 12 of the front part 2A of walls 2, are provided with respective barbed projections 13, opposed on the inner surfaces thereof, which are provided on the inside with a flat wall 14 which, together, form a movement limiting stop for a crook 6 of windscreen wiper arm 7 mounted on cross member partition 5A that is farthest removed from grooved partition 4.

## Claims

1. Wiper blade adapter for the arm (7) of a car windscreen wiper, said arm (7) having a free end (6) which adopts a crook shape, said adapter comprising a body (1) formed by two long walls (2) which are parallel and are associated to one another, in the front part thereof (2A), by means of cross members that define, on the one hand, means for attachment to a transversal bolt on the wiper blade said means being made up of a grooved partition (4), which opens into respective notches (3) in said walls (2) and, on the other hand, means for securing the crook shaped free ends (6) of arms (7) of the windscreen wiper according to the different radii and lengths of said free ends (6), and for limiting the relative longitudinal movement between the wiper blade and arm (7) of the windscreen wiper, with said securing and movement limiting means being formed by double purpose cross member partitions (5A, 5B) that have a straight flat-convex section, whereby said body (1) formed the two parallel walls (2) has the two ends thereof front (1A) and rear (1B) open, **characterised in that** said walls (2) are deformable in the rear part (2B) thereof that forms said rear end (1B), on the inner surfaces thereof said two parallel walls (2) having, on their end edges (9) on the rear part of body (1), respective equal projections (8), which are grooved longitudinally and have their concavities (8A) arranged in opposition for engaging the edges of a wiper arm.

2. Adapter, according to the previous claim, **characterised in that** the concavity (8A) on each of grooved projections (8) of the rear part of body (1) has a configuration that complements the corresponding edge (10) of arm (7) of the windscreen wiper.

3. Adapter, according to claims 1 or 2, **characterised in that** body (1), on the edge of rear part (2B) of walls (2) opposite to notches (3) thereof, has on the outside a longitudinal cantilever wing (11) which runs substantially along said edge.

4. Adapter, according to claim 3, **characterised in that** longitudinal cantilever wing (11) increases its width towards end edge (9) of the rear part of body (1).

5. Adapter, according to any of claims 1 to 4, **characterised in that** walls (2), which are rigidly parallel, are associated in the front part (2A) thereof, not only by grooved partition (4) for attachment to the wiper blade bolt, but also by two cross member partitions (5A, 5B) that have a straight flat-convex section.

6. Adapter, according to any of claims 1 to 5, **characterised in that** walls (2) are rigidly parallel in the front part (2A) thereof and have, on the inner surface of their end edges (12), respective barbed opposed projections (13) each of which has on the inside thereof a flat wall (14) which, together, form a movement limiting stop for a crook (6) of arm (7) of windscreen wipers mounted on cross member partition (5A) having a straight flat-convex section that is the farthest removed from grooved partition (4).

## Patentansprüche

1. Wischblattadapter für den Arm eines Kraftfahrzeugscheibenwischers, wobei der Arm (7) ein freies Ende (6) aufweist, das hakenförmig ist, wobei der Adapter einen Körper (1) umfasst, der durch zwei lange Wände (2) ausgebildet wird, die parallel verlaufen und in dem vorderen Teil davon (2A) miteinander verbunden sind, und zwar über quer verlaufende Elemente, die einerseits Mittel zum Anbringen an einen quer verlaufenden Bolzen auf dem Wischblatt definieren, wobei die Mittel aus einem mit einer Rille versehenen Trennelement (4) ausgebildet sind, das sich in jeweilige Kerben (3) in den Wänden (2) öffnet, sowie andererseits Mittel zum Befestigen der hakenförmigen freien Enden (6) der Arme (7) des Scheibenwischers gemäß den unterschiedlichen Radien und Längen der freien Enden (6) und zum Beschränken der relativen Längsbewegung zwischen dem Wischblatt und dem Arm (7) des Scheibenwischers, wobei die Mittel zum Befestigen und zum Beschränken der Bewegung durch quer verlaufende Trennelemente (5A, 5B) mit zweifachem Zweck ausgebildet sind, die einen flachen, geraden, konvexen Bereich aufweisen, wobei der Körper (1), der aus den zwei parallelen Wänden (2) ausgebildet wird, seine beiden Enden, vorne (1A) und hinten (1B), geöffnet hat, wobei die Wände in dem hinteren Teil (2B) davon verformt werden können, der das hintere Ende (1B) ausbildet, wobei auf den Innenseiten davon die zwei parallelen Wände (2) an deren Endkanten (9) des hinteren Teils des Körpers (1) jeweils gleiche Vorsprünge (8) aufweisen, die längs mit einer Rille versehen sind und deren Wölbungen (8A) in gegenüberliegender Position angeordnet sind, um die Kanten eines Scheibenwischerarms in Eingriff zu nehmen.

2. Adapter nach dem vorhergehenden Anspruch, **dadurch gekennzeichnet, dass** die Wölbung (8A) von jedem der mit einer Rille versehenen Vorsprünge (8) an dem hinteren Teil des Körpers (1) eine Ausgestaltung aufweist, die die entsprechende Kante (10) des Arms (7) des Scheibenwischers komplementiert.

3. Adapter nach Anspruch 1 oder 2, **dadurch gekennzeichnet, dass** der Körper (1) an der Kante des hinteren Teils (2B) der Wände (2) gegenüber den Kerben (3) darauf auf der Außenseite einen längs verlaufenden Auslegerflügel (11) aufweist, der im Wesentlichen entlang der Kante verläuft.

4. Adapter nach Anspruch 3, **dadurch gekennzeichnet, dass** die Breite des längs verlaufenden Auslegerflügel (11) in Richtung der Endkante (9) des hinteren Teils des Körpers (1) zunimmt.

5. Adapter nach einem der Ansprüche 1 bis 4, **dadurch gekennzeichnet, dass** die Wände (2), die unbiegsam parallel verlaufen, in dem vorderen Teil (2A) davon nicht nur durch das mit einer Rille versehene Trennelement (4) für das Anbringen an den Wischblattbolzen, sondern außerdem über zwei quer verlaufende Trennelemente (5A, 5B) verbunden, die einen geraden, flachen, konvexen Bereich aufweisen.

6. Adapter nach einem der Ansprüche 1 bis 5, **dadurch gekennzeichnet, dass** die Wände (2) unbiegsam parallel in dem vorderen Teil (2A) davon verlaufen und auf der Innenseite der Endkanten (12) davon jeweils gegenüberliegende mit Widerhaken versehene Vorsprünge (13) aufweisen, von denen jeder auf der Innenseite davon eine flache Wand (14) aufweist, die zusammen ein Bewegungsbegrenzungsstoppelement für einen Haken (6) eines Arms (7) eines Scheibenwischers ausbilden, der auf dem quer verlaufenden Trennelement (5A) befestigt ist, das einen flachen, geraden, konvexen Bereich aufweist, der am Weitesten von dem mit einer Rille versehenen Trennelement (4) entfernt ist.

## Revendications

1. Adaptateur de balai pour le bras (7) d'un essuie-glace de véhicule, ledit bras (7) présentant une extrémité libre (6) qui présente une forme de crochet, ledit adaptateur comprenant un corps (1) formé par deux longues parois (2) qui sont parallèles et sont associées l'une à l'autre, au niveau de leur partie avant (2A), au moyen d'éléments transversaux qui définissent, d'une part, des moyens destinés à la fixation à un boulon transversal sur le balai d'essuie-glace, lesdits moyens étant constitués d'une cloison rainurée (4), qui s'ouvre dans des encoches respectives (3) dans lesdites parois (2) et, d'autre part, des moyens destinés à fixer les extrémités libres (6) en forme de crochet des bras (7) de l'essuie-glace en fonction des différents rayons et différentes longueurs desdites extrémités libres (6), et destinés à limiter le déplacement longitudinal relatif entre le balai et le bras (7) de l'essuie-glace, lesdits moyens de fixation et de limitation de déplacement étant formés par des cloisons formant éléments d'entretoise à double fonction (5A, 5B) qui présentent une section plate-convexe droite, moyennant quoi ledit corps (1) formé par les deux parois parallèles (2) est pourvue d'une extrémité avant (1A) et d'une extrémité arrière (1B) toutes deux ouvertes, **caractérisé en ce que** lesdites parois (2) sont déformables au niveau de leur partie arrière (2B) qui forme ladite extrémité arrière (1B), sur leurs surfaces internes lesdites parois parallèles (2) présentant, sur leurs bords d'extrémité (9) sur la partie arrière du corps (1), des projections égales (8) respectives, qui sont rainurées longitudinalement et présentent des concavités (8A) disposées de manière opposée pour mettre en prise les bords d'un bras d'essuie-glace.

2. Adaptateur selon la revendication précédente, **caractérisé en ce que** la concavité (8A) sur chacune des projections rainurées (8) de la partie arrière du corps (1) présente une configuration qui complète le bord correspondant (10) du bras (7) de l'essuie-glace.

3. Adaptateur selon les revendications 1 ou 2, **caractérisé en ce que** le corps (1), sur le bord de la partie arrière (2B) des parois (2) opposé aux encoches (3), présente sur l'extérieur une aile en porte-à-faux (11) qui s'étend sensiblement le long dudit bord.

4. Adaptateur selon la revendication 3, **caractérisé en ce que** la largeur de l'aile longitudinale en porte-à-faux (11) augmente vers le bord d'extrémité (9) de la partie arrière du corps (1).

5. Adaptateur selon l'une quelconque des revendications 1 à 4, **caractérisé en ce que** les parois (2), qui sont parallèles de manière rigide, sont associées au niveau de leur partie avant (2A), non seulement par la cloison rainurée (4) destinée à être fixée au boulon de balai d'essuie-glace, mais également par deux cloisons formant éléments d'entretoise (5A, 5B) qui présentent une section plate-convexe droite.

6. Adaptateur selon l'une quelconque des revendications 1 à 5, **caractérisé en ce que** les parois (2) sont parallèles de manière rigide au niveau de leur partie avant (2A) et présentent, sur la surface interne de leurs bords d'extrémité (12), des projections opposées cannelées (13) respectives dont chacune présente à l'intérieur une paroi plate (14) qui forme une butée de limitation de déplacement pour un crochet (6) de bras (7) de balais d'essuie-glace montés sur une cloison formant éléments d'entretoise (5A) présentant une section plate-convexe droite qui est la plus éloignée de la cloison rainurée (4).
